Europäisches Patentamt

European Patent Office

Office européen des brevets

(11) Veröffentlichungsnummer: 0 212 186
A1

# EUROPÄISCHE PATENTANMELDUNG

(21) Anmeldenummer: 86109176.7

(22) Anmeldetag: 04.07.86

(51) Int. Cl.4: **A01D 90/10 , A01D 90/14**

(30) Priorität: 14.08.85 DE 3529201

(43) Veröffentlichungstag der Anmeldung:
04.03.87 Patentblatt 87/10

(84) Benannte Vertragsstaaten:
AT BE CH DE FR GB IT LI NL

(71) Anmelder: **Klöckner-Humboldt-Deutz AG
Zweigniederlassung Fahr**

**D-7702 Gottmadingen(DE)**

(72) Erfinder: **Silber, Wilhelm, Dipl.-Ing.
Petersburg 10
D-7702 Gottmadingen 3(DE)**

(54) **Ladewagen.**

(57) Der Ladewagen für Blatt-oder Halmgüter weist an seinem vorderen Teil zum Beladen eine antreibbare Ladetrommel (2) auf und an seinem Rückteil zum Entladen eine verschwenkbare Heckklappe und mindestens eine antreibbare Dosierwalze (4). Die Dosierwalze (4) wird über ein mechanisches Mehrganggetriebe mit mindestens zwei Gängen derart angetrieben, daß im einen Gang die Dosierwalze mit niedriger Drehzahl und hohem Drehmoment und im anderen Gang mit hoher Drehzahl und niedrigem Drehmoment antreibbar ist.

Fig. 1

EP 0 212 186 A1

## Ladewagen

Die Erfindung betrifft einen Ladewagen für Blatt-oder Halmgüter, der an seinem Vorderteil zum Beladen eine antreibbare Ladetrommel aufweist und der an seinem Rückteil zum Entladen eine verschwenkbare Heckklappe und mindestens eine antreibbare Dosierwalze aufweist.

Zur Erleichterung des Abladens des Ernteguts vom Ladewagen sind an deren Enden üblicherweise in der Nähe der Heckklappe eine oder mehrere Dosierwalzen mit Zinken vorgesehen, die entweder waagrecht übereinander oder auch senkrecht nebeneinander angeordnet sind und die über einen geeigneten Antrieb vom Schlepper gleichsinnig angetrieben werden. Da die Ladewagen meistens außerdem einen Kratzboden aufweisen, der während des Entladens in Bewegung gesetzt wird, um so das Blatt-oder Halmgut den Dosierwalzen zuzuführen, kann ein schnelles und problemloses Entladen des Ladewagens erreicht werden.

Das Beladen eines derartigen Ladewagens kann z.B. durch eine an seinem Vorderteil eingebaute Ladetrommel erfolgen, wobei das so aufgenommene Erntegut durch den in Bewegung gesetzten Kratzboden nach hinten gefördert wird, bis der Ladewagen ausreichend dicht gepackt ist. Soll der Ladewagen mit Häckselgut gefüllt werden, so wird dieses üblicherweise von Feldhäckslern, die parallel zum Ladewagen laufen, in diesen eingeblasen. Dabei setzt sich das Häckselgut in den Zwischenräumen zwischen den Dosierwalzen fest, wobei diese Verdichtung bei Fahrt des Wagens durch Rütteln noch erheblich verstärkt wird.

Zwar wird zum Entladen die hintere Heckklappe nach außen verschwenkt, so daß das auf dieser Seite zwischen den Dosierwalzen und der Heckklappe liegende Erntegut herabfällt jedoch bleibt die dem Inneren des Ladewagens zugewandte Seite weiterhin dicht gepackt und drückt gegen die Dosierwalzen. Für deren Anlaufen is daher ein sehr großes Drehmoment erforderlich, welches das Drehmoment während des normalen Abladevorganges erheblich übersteigt. Dies bedingt entweder eine übermäßige Dimensionierung der das Drehmoment übertragenden Teile oder aber einen erheblichen Zeitverlust bei Inbetriebsetzen der Dosierwalzen, da häufig ein manueller Eingriff erforderlich ist um das Ladegut von außen zwischen den Dosierwalzen hindurch so weit zu entfernen, daß diese ungehindert anlaufen können.

Üblicherweise sind daher derartige Ladewagen mit einem Ladungsfühler versehen, der den Kratzbodenantrieb abschaltet, sobald das Erntegut die untere Dosierwalze erreicht. Dadurch wird in der Regel der Anlauf der Dosierwalzen gewährleistet, jedoch ist der Laderaum in seinem hinteren Teil nicht mehr optimal ausgenützt. Ferner wird durch die ungleichmäßige Beladung der Wagen kopflastig und die gewünschte Transportleistung nicht erreicht.

Aus der DE-AS 12 04 537 ist eine Einrichtung zum Erleichtern des Anlaufens der Abladeeinrichtung an Häckselwagen bekannt, bei welcher der die Verteilerorgane tragende Arm zwischen einer Belade-und einer Anlaufstellung am Aufbau des Häckselwagens umklappbar angelenkt ist. Zu diesem Zweck ist die Anlenkachse des Rahmens in der Nähe des Kraftübertragungsgliedes zwischen dem Antriebselement am Häckselwagen und den Verteilerorganen angeordnet, wobei mittels eines Betätigungshebels und eines Kniegelenksystems der gesamte Rahmen mit den an ihm angeordneten Verteilerorganen von dem dicht gepackten Erntegut so weit entfernt wird, daß ein freies Anlaufen der Walzen gewährleistet ist. Eine derartige Konstruktion ist aufwendig und zeitraubend, da die Bedienungsperson vor dem eigentlichen Entladevorgang den Rahmen manuell wegklappen muß, die Walzen anlaufen läßt und diese dann gefühlvoll an das Erntegut heranführen muß.

Aus der älteren Anmeldung der Anmelderin P 35 19 854 ist ein derartiger Ladewagen bekannt, der an seinem rückwärtigen Ende mehrere Dosierwalzen sowie eine verschwenkbare Heckklappe aufweist, wobei jede Dosierwalze ein sich im wesentlichen über deren ganze Länge erstreckender und um die Achse der Dosierwalze - schwenkbarer Schutzschild zuge ordnet ist, der in etwa ein Viertel des Flugweges der Dosierwalzenzinken abdeckt.

Es wurde auch schon vorgeschlagen, hydraulische Antriebe mit unterschiedlichen Drehzahlen für die Dosierwalzen zu verwenden, wobei jedoch noch der Nachteil auftritt, daß insbesondere bei hohen Anfahrmomenten nur geringe Wirkungsgrade erzielbar sind.

Aufgabe der vorliegenden Erfindung ist es, einen Ladewagen mit Dosierwalzen derart auszugestalten, daß auch bei voll beladenem Ladewagen die Dosierwalzen problemlos anlaufen, so daß ein - schnelles und sicheres Entladen ohne manuelles Eingreifen ermöglicht wird.

Ausgehend von einem Ladewagen der eingangs näher genannten Art, wird zur Lösung dieser Aufgabe vorgeschlagen, daß der Dosierwalze ein mechanisches Mehrganggetriebe mit mindestens zwei Gängen derart zugeordnet ist, daß im einen Gang die Dosierwalze mit niedriger Drehzahl und hohem Drehmoment und im anderen Gang mit hoher Drehzahl und niedrigem Drehmoment antreibbar ist.

Bei einem ersten Ausführungsbeispiel weist das Mehrganggetriebe ein eingangsseitiges Antriebsrad auf, das drehfest mit einer Antriebswelle verbunden ist, auf welcher eine mit ihr drehfest aber in Axialrichtung verschiebbar gelagerte Kupplung angeordnet ist, die in ihrer einen Endstellung in ein erstes Losrad eingreift, das über eine erste Übersetzung die Dosierwalze antreibt und die in ihrer anderen Endstellung in ein zweites Losrad eingreift, das über eine zweite Übersetzung die Dosierwalze mit unterschiedlicher Drehzahl antreibt.

Die Kupplung kann dabei manuell oder automatisch von ihrer einen Endstellung in ihre andere Endstellung verschiebbar sein.

Bei einem anderen vorteilhaften Ausführungsbeispiel weist das Mehrganggetriebe ein eingangsseitiges Antriebsrad auf, das drehfest mit einer Antriebswelle verbunden ist, auf der ein Kettenrad drehfest angeordnet ist, das über einen Kettentrieb mit einem ersten Losrad, welches über einen Freilauf mit der die Dosierwalze antreibenden Welle verbunden ist, in Antriebsverbindung steht, und die Dosierwalze mit einer ersten Geschwindigkeit antreibt, während auf der Antriebswelle zwischen dem Antriebsrad und dem Kettenrad ein Losrad mit einer Überlastratsche verschiebbar und drehbar gelagert ist, das von einer zwischen ihm und dem Kettenrad angeordneten Feder in Richtung in Eingriffsstellung mit der Antriebswelle beaufschlagt wird, wobei das Losrad, das ebenfalls mit einer Verzahnung versehen ist, über einen Kettentrieb mit einem auf der die Dosierwalze antreibenden Welle drehfest angeordneten Kettenrad verbunden ist, das die Dosierwalze mit einer zweiten Geschwindigkeit antreibt.

Vorteilhaft in der Antriebsführung ist es, wenn das Antriebsrad in Wirkverbindung mit einem Kegelrad steht und somit ein Winkelgetriebe bildet.

Vorzugsweise ist die Antriebswelle des Winkelgetriebes mit einem Antrieb für den Kratzboden des Ladewagens verbunden.

Vorteilhafterweise unterbricht der mit dem Losrad auf die Dosierwalze antreibenden Welle versehene Freilauf den Kraftschluß zwischen dem Losrad und der Welle, wenn das feststehende Kettenrad auf dieser Welle die Dosierwalze antreibt.

Besonders vorteilhaft ist es, wenn zwischen dem Mehrganggetriebe und dem Winkelgetriebe für die Verbindung des Ladewagens mit der Zapfwelle des ihn ziehenden Schleppers eine umschaltbare Kupplung vorgesehen ist, die in der einen Endstellung über einen Kettentrieb mit dem ersten Kettenrad des Mehrganggetriebes verbunden ist.

Diese Kupplung kann eine Klauenkupplung sein, die in der zweiten Endstellung über einen zweiten Kettentrieb mit der Ladetrommel des Ladewagens verbindbar ist.

Der Antrieb des Kratzbodens ist in jeder Stellung der Kupplung geschlossen.

Mit dem erfindungsgemäß ausgestalteten Antrieb für die Dosierwalzen eines Ladewagens steht zum Anlaufen der Dosierwalzen ein hohes Drehmoment bei niedriger Drehzahl zur Verfügung, das so lange erforderlich ist, bis sich die Walzen freigearbeitet haben. Anschließend wird automatisch oder manuell der zweite Gang eingelegt, der entsprechend der Übersetzung eine hohe Walzendrehzahl beinhaltet bei niedrigerem Kraftbedarf nach dem Freiarbeiten der Walze, so daß auch nur ein niedrigeres Drehmoment erforderlich ist.

Durch den zusätzlichen Langsamgang zum Anlaufen der Walzen wird also das Drehmoment beim Anlaufen bei gleicher Antriebsleistung erheblich höher. Dadurch ist es möglich, bei voll beladenem Ladewagen die Dosierwalzen im ersten Gang mit hohem Drehmoment anfahren zu lassen um sie dann auf Normaldrehzahl umzuschalten.

Im folgenden wird die Erfindung anhand der Zeichnung näher erläutert, in der zwei vorteilhafte Ausführungsbeispiele dargestellt sind. Es zeigen:

Figur 1 schematisch eine Draufsicht auf einen Ladewagen mit einem ersten erfindungsgemäßen Antrieb der Dosierwalzen und

Figur 2 schematisch eine Draufsicht auf einen Ladewagen mit einem zweiten erfindungsgemäßen Antrieb für die Dosierwalzen.

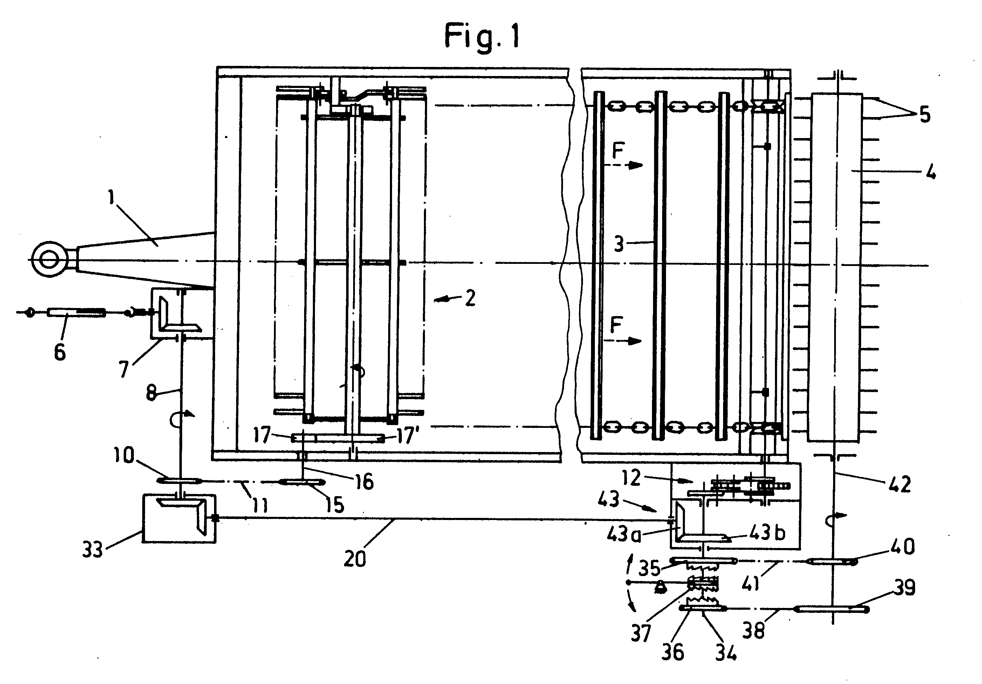

Bei der in Figur 1 gezeigten schematischen Draufsicht ist mit 1 die Deichsel eines Ladewagens bezeichnet, die zum Anschluß an einen nicht dargestellten Schlepper dient. Von der Zapfwelle des Schleppers wird mittels einer Kardanwelle eine Drehbewegung auf ein erstes am Vorderteil des Ladewagens angeordnetes Winkelgetriebe 7 übertragen, von dem aus eine Welle 8 angetrieben wird, auf der drehfest ein Kettenrad 10 angeordnet ist um über einen Kettenantrieb 11 ein weiteres auf einer Welle 16 drehfest gelagertes Kettenrad 15 anzutreiben zum Antrieb einer am Vorderteil des Ladewagens sich im wesentlichen über seine gesamte Breite erstreckende und waagrecht liegende Ladetrommel 2, mit der das geschnittene Erntegut in den Ladewagen gefördert wird. Die Ladetrommel 2 weist dazu an ihrem antriebsseitigen Ende entsprechende Zahnräder 17, 17' auf.

Zwischen der Ladetrommel 2 und dem Rückteil des Ladewagens ist ein bewegbarer Kratzboden 3 angeordnet, der in Richtung der Pfeile F durch einen geeigneten Antrieb verschiebbar ist um das am Vorderteil aufgenommene Erntegut nach hinten zu befördern. Ferner ist am Rückteil des Ladewagens eine nicht dargestellte aufklappbare Heckklappe vorgesehen vor der eine oder mehrere sich im wesentlichen über die gesamte Breite des Ladewagens erstreckende und waagrecht angeordnete Dosierwalzen 4 angeordnet sind, die mit Zinken 5 versehen sind und die zum Entladen des Erntegutes dienen.

Bei dem in Figur 1 dargestellten Ausführungsbeispiel greift die Welle 8 in ein zweites Winkelgetriebe 33 ein, dessen ausgangsseitige Welle 20 bis zu einem der Dosierwalze 4 zugeordneten Mehrganggetriebe führt.

Dieses Mehrganggetriebe weist ein drittes Winkelgetriebe 43 mit den Kegelrädern 43a, 43b auf, an dessen ausgangsseitiger Antriebswelle 34 eine mit dieser Welle drehfest verbundene, jedoch in Axialrichtung auf ihr verschiebbare Kupplung 37 angeordnet, die mittels eines Betätigungshebels 9 verschiebbar ist. Die verschiebbare Kupplung kann die Form einer Buchse aufweisen, deren beide sich gegenüberliegende ringförmige Ränder mit entsprechenden Zahnungen versehen sind, die in entsprechend geformte Zahnungen zweier Losräder wahlweise eingreifen können. Auf der Welle 34 ist mit 35 ein erstes Losrad 35 bezeichnet, das über einen geeigneten Antrieb z.B. einen Kettenantrieb 41 mit einem auf der Antriebswelle 42 für die Dosierwalze 4 drehfest angeordneten Kettenrad 40 verbunden ist, während mit 36 ein zweites auf der Welle 34 angeordnetes Losrad bezeichnet ist, das über einen geeigneten Antrieb 38 z.B. über einen Kettenantrieb mit einem zweiten auf der Antriebswelle 42 für die Dosierwalze 4 drehfest angeordneten Kettenrad 39 verbunden ist. Die Kettenräder 39 und 40 weisen unterschiedliche Durchmesser auf, wobei z.B. das Kettenrad 39 einen größeren Durchmesser als das Kettenrad 40 aufweist, so daß bei Eingriff der verschiebbaren Kupplung 37 in das zweite Losrad 36 auf der Welle 34 durch entsprechende Betätigung des Hebels 9 das Kettenrad 39 größeren Durchmessers angetrieben wird, wodurch sich die Dosierwalze 4 mit niedriger Drehzahl aber hohem Drehmoment dreht. Wird durch entgegengesetzte Betätigung des Hebels 9 die verschiebbare Kupplung 37 mit dem Losrad 35 auf der Welle 34 in Eingriff gebracht, so dreht sich über den Kettenantrieb 41 das Kettenrad 40 mit kleinerem Durchmesser mit größerer Drehzahl aber niedrigerem Drehmoment. Auch die Losräder 36 und 35 können um einen höheren Drehzahlunterschied zu erreichen, unterschiedliche Durchmesser aufweisen.

Die Welle 34 ist ferner zum Antrieb des Kratzbodens 3 mit einem geeigneten Klinkenradantrieb 12 verbunden, der direkt auf die Antriebswelle und die Antriebskette für den Kratzboden wirkt.

In der in Figur 1 gezeigten Mittenstellung der verschiebbaren Kupplung 37 erfolgt kein Antrieb der Dosierwalze 4. Durch Betätigung des Hebels 9 nach oben in Figur 1 wird hingegen der erste Gang für die Dosierwalze 4 eingeschaltet und bei Betätigung des Hebels 9 nach unten in Figur 1 der zweite Gang, der dann benötigt wird, wenn das unmittelbar an der Dosierwalze 4 anliegende Gut bereits entladen worden ist.

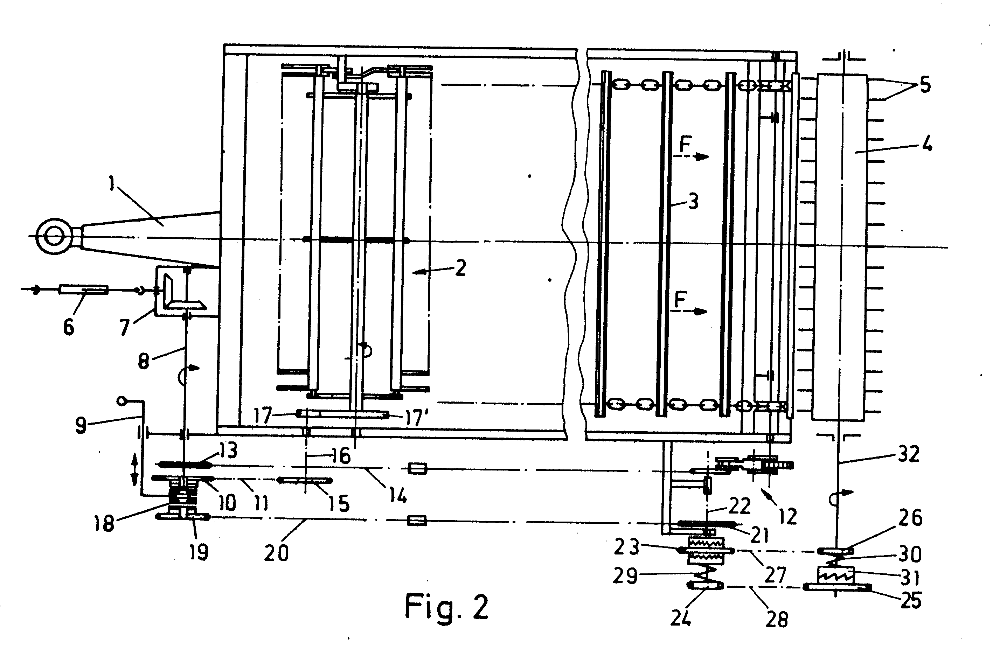

In Figur 2 ist ein zweites Ausführungsbeispiel eines geeineten Antriebs für einen Ladewagen dargestellt, wobei gleiche Teile mit gleichen Bezugszeichen versehen sind. Anstelle des Winkelgetriebes 33 ist hierbei eine in der Nähe des Vorderteils des Ladewagens angeordnete Klauenkupplung 18 vorgesehen, die auf der ausgangsseitigen Antriebswelle 8 des Winkelgetriebes 7 verschiebbar angeordnet ist. Die Verschiebung und damit die Betätigung der Klauenkupplung 18 erfolgt mittels eines Hebels 9, der die drehfest aber verschiebbar auf der Welle 8 angeordnete Klauenkupplung einmal in Richtung "Aufladen", d.h. einschalten der Ladetrommel 2 und zum anderen in Richtung "Abladen", d.h. Betätigung des Mehrganggetriebes für die Dosierwalze 4, einschaltet. Der Kratzboden 3 ist bei diesem Ausführungsbeispiel über ein geeignetes Klinkenschaltwerk 12 und einen Antrieb 14, z.B. einem Kettenantrieb mit einem Kettenrad 13 auf der Welle 8 verbunden.

Zur Betätigung der Ladetrommel 2 greift die Klauenkupplung 18 in ein erstes Kettenrad 10 auf der Welle 8 ein, das über einen Kettenantrieb 11 mit dem Kettenantriebsrad 15 der Antriebswelle 16 und geeignete Zahnräder 17, 17' mit der Ladetrommel 2 verbunden ist.

Um das Erntegut abzuladen, betätigt die Klauenkupplung 18 bei entgegengesetzter Verschiebung ein Kettenrad 19, das über einen Kettenantrieb 20 mit einem ersten Kettenrad 21 des Mehrganggetriebes verbunden ist. Das Kettenrad 21 ist drehfest auf einer Antriebswelle 22 angeordnet, an deren einem Ende ein zweites Kettenrad 24 drehfest angeordnet ist. Dieses Kettenrad 24 ist über einen Kettenantrieb 28 mit einem auf der Antriebswelle 32 für die Dosierwalze 4 angeordnetem Losrad 25 mit Freilauf 31 verbunden.

Zwischen den Kettenrädern 21 und 24 auf der Welle 22 ist eine Kupplung 23 in Form eines Losrades mit Überlastratsche verschiebbar angeordnet, die durch eine zwischen dem Kettenrad 24 und in ihr angeordnete Feder 29 vom Kettenrad 24 in Richtung zum Kettenrad 21 hin beaufschlagt wird.

Dieses Losrad 23 ist über einen Kettenantrieb 27 mit einem auf der Antriebswelle 32 für die Dosierwalze 4 drehfest angeordneten Kettenrad 26 verbunden.

Der Antrieb für die Dosierwalze 4 bei diesem Ausführungsbeispiel geschieht wie folgt: Wird der Hebel 9 in Richtung Abladen, d.h. in Figur 2 nach unten betätigt, so wird über den Kettenantrieb 20 das Kettenrad 21 und damit die Welle 22 betätigt. Durch das beim Anlaufen der Dosierwalze 4 bestehende hohe Anfahrmoment rutscht die Überlastratsche des Losrades 23 durch, so daß dieses außer Eingriff mit der Welle 22 ist und das Kettenrad 26 nicht betätigt wird. Die Antriebswelle 32 wird hingegen über das Kettenrad 24 und das Kettenrad 25 betätigt, so daß die Antriebswelle 32 sich mit geringer Drehzahl aber hohem Drehmoment dreht.

Nachdem sich die Dosierwalze 4 (oder die Dosierwalzen 4) freigearbeitet haben, sinkt das erforderliche Drehmoment ab und die Überlastratsche des Losrades 23 nimmt das zugehörige Kettenrad wieder mit. Nunmehr wird über den Kettenantrieb 27 das Kettenrad 26 kleineren Durchmessers auf der Antriebswelle 32 betätigt, so daß sich die Dosierwalze 4 mit größerer Drehzahl aber geringerem Drehmoment dreht. Das Losrad 25 wird durch den zugehörigen Freilauf 31, der von einer Feder 30 beaufschlagt wird, überholt und damit unwirksam bezüglich des Antriebes der Welle 32.

Das Losrad 23 kann auf beiden Seiten mit entsprechend gezahnten Endbereichen versehen sein, die in entsprechenden Zahnungen der zugehörigen Antriebsteile auf der Welle 22 eingreifen.

Der Hebel 9 kann bei beiden Ausführungen manuell oder automatisch betätigt werden, wobei im letzteren Fall ein Fühler in der Nähe der Dosierwalze 4 erforderlich ist, der den Druck des Erntegutes auf diese Dosierwalze feststellt.

Mit dem erfindungsgemäß ausgestalteten Ladewagen ist es also möglich schnell und problemlos einen vollgeladenen Ladewagen zu entladen, da der Dosierwalzenantrieb die Dosierwalzen mit niedriger Drehzahl aber hohem Drehmoment anlaufen läßt und nach Abladen des unmittelbar benachbarten Erntegutes, d.h. nach Freiarbeiten der Dosierwalze, auf eine höhere Drehzahl mit niedrigerem Drehmoment umschaltet.

Die unterschiedlichen Antriebsführungen der gezeigten Beispiele zum Mehrganggetriebe sind auch gegeneinander austauschbar.

## Ansprüche

1. Ladewagen für Blatt-oder Halmgüter, der an seinem Vorderteil zum Beladen eine antreibbare Ladetrommel aufweist und an seinem Rückteil zum Entladen eine verschwenkbare Heckklappe und mindestens eine antreibbare Dosierwalze aufweist, dadurch gekennzeichnet, daß der Dosierwalze (4) ein mechanisches Mehrganggetriebe mit mindestens zwei Gängen derart zugeordnet ist, daß im einen Gang die Dosierwalze (4) mit niedriger Drehzahl und hohem Drehmoment und im anderen Gang mit hoher Drehzahl und niedrigem Drehmoment antreibbar ist.

2. Ladewagen nach Anspruch 1, dadurch gekennzeichnet, daß das Mehrganggetriebe ein eingangsseitiges Antriebsrad (43b) aufweist, das drehfest mit einer Antriebswelle (34) verbunden ist, auf welcher eine mit ihr drehfest aber in Axialrichtung verschiebbar gelagerte Kupplung (37) angeordnet ist, die in ihrer einen Endstellung in ein erstes Losrad (35) eingreift, das über einen ersten Kettenantrieb (41) und ein auf der Antriebswelle (42) für die Dosierwalze (4) drehfest angeordnetes Kettenrad (40) die Dosierwalze antreibt und die in ihrer anderen Endstellung in ein zweites Losrad (36) eingreift, das über einen zweiten Kettenantrieb (38) und ein zweites auf der Antriebswelle (42) für die Dosierwalze (4) angeordnetes Kettenrad (39) die Dosierwalze mit unterschiedlicher Drehzahl antreibt.

3. Ladewagen nach Anspruch 1, dadurch gekennzeichnet, daß das Mehrganggetriebe ein eingangsseitiges Antriebsrad (21) aufweist, das drehfest mit einer Antriebswelle (22) verbunden ist, auf der ein Kettenrad (24) drehfest angeordnet ist, das über einen Kettenantrieb (28) mit einem ersten Losrad (25) welches über einen Freilauf (30, 31) mit der die Dosierwalze (4) antreibenden Welle (32) verbunden ist, in Antriebsrichtung steht, und die Dosierwalze mit einer ersten Geschwindigkeit antreibt, daß auf der Antriebswelle (22) zwischen dem Antriebsrad (21) und dem Kettenrad (24) eine Kupplung (23) in Form eines Losrades mit Überlastratsche verschiebbar und drehbar gelagert ist, die von einer zwischen ihr und dem Kettenrad (24) angeordneten Feder (29) in Richtung zum Antriebsrad (21) hin beaufschlagt wird und daß das Losrad (23) über einen Kettenantrieb (27) mit einem auf der die Dosierwalze antreibenden Welle (32) drehfest angeordneten Kettenrad (26) verbunden ist, das die Dosierwalze mit einer zweiten Geschwindigkeit antreibt.

4. Ladewagen nach einem der Ansprüche 2 und 3, dadurch gekennzeichnet, daß das Antriebsrad (43b) in Wirkverbindung mit einem Kegelrad (43a) ein Winkelgetriebe (43) gebildet.

5. Ladewagen nach Anspruch 4, dadurch gekennzeichnet, daß die Antriebswelle (34) des Winkelgetriebes (43) mit einem Antrieb (12) für den Kratzboden (3) des Ladewagens verbunden ist.

6. Ladewagen nach einem der Ansprüche 2, 4 und 5, dadurch gekennzeichnet, daß die Kupplung (37) durch einen Hebel (9) manuell oder automatisch verschiebbar ist.

7. Ladewagen nach Anspruch 3, dadurch gekennzeichnet, daß das Losrad (23) und das Kettenrad (24) unterschiedliche Durchmesser aufweisen.

8. Ladewagen nach Anspruch 3, dadurch gekennzeichnet, daß das Kettenrad (26) und das Losrad (25) unterschiedliche Durchmesser aufweisen.

9. Ladewagen nach einem der Ansprüchen 3, 7 und 8, dadurch gekennzeichnet, daß der mit dem Losrad (25) auf der die Dosierwalze (4) antreibenden Welle (32) versehene Freilauf (30, 31) den Kraftschluß zwischen dem Losrad (25) und der Welle (32) unterbricht, wenn das Losrad (23) das Kettenrad (26) antreibt.

10. Ladewagen nach einem der vorhergehenden Ansprüche, dadurch gekennzeichnet, daß zwischen dem Mehrganggetriebe für den Antrieb der Dosierwalze (4) und einem Winkelgetriebe (7) für die Verbindung des Ladewagens mit der Zapfwelle des ihn ziehenden Schleppers eine Kupplung (18) vorgesehen ist, die in ihrer einen Endstellung über einen Kettenantrieb (20) mit dem Antriebsrad (21) des Mehrganggetriebes verbunden ist und die in ihrer anderen Endstellung über einen Kettenantrieb (11) mit der Ladetrommel (2) verbunden ist.

11. Ladewagen nach Anspruch 9, dadurch gekennzeichnet, daß die Kupplung (18) eine Klauenkupplung ist, die über einen Hebel (9) betätigbar ist.

# Fig.1

0 212 186

Fig. 2

0 212 186

Europäisches
Patentamt

**EUROPÄISCHER RECHERCHENBERICHT**

Nummer der Anmeldung

| EINSCHLÄGIGE DOKUMENTE | | | EP 86109176.7 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US - A - 4 129 258 (MOTT et al.)<br>* Spalte 1, Zeilen 22-26,44-47*<br>-- | 1 | A 01 D 90/10<br>A 01 D 90/14 |
| A | DE - A - 2 514 118 (GERÄTEBAU SCHWARTING KG)<br>* Seite 3, 4.Absatz; Seite 7, 3. Absatz *<br>-- | 1 | |
| D,A | DE - B - 1 204 537 (GEBRÜDER WELGER)<br>* Gesamt *<br>-- | 1 | |
| A | US - A - 3 583 242 (THORNBLOOM et al.)<br>-- | | |
| A | US - A - 4 480 735 (PINGRY)<br>---- | | |

RECHERCHIERTE SACHGEBIETE (Int. Cl.4)

A 01 C
A 01 D
B 65 G

Der vorliegende Recherchenbericht wurde für alle Patentansprüche erstellt.

| Recherchenort | Abschlußdatum der Recherche | Prüfer |
|---|---|---|
| WIEN | 25-09-1986 | FESSLER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82